# FASCICULE DE BREVET EUROPEEN

(11) **EP 3 569 379 B1**
(45) Date de publication et mention de la délivrance du brevet: **27.01.2021**
(21) Numéro de dépôt: 19174749.2
(22) Date de dépôt: 15.05.2019
(51) Int. Cl.: B29C 45/00, B05B 13/02, B05B 5/00, B60R 19/18

(54) **PIÈCE DE CARROSSERIE À PEINDRE COMPORTANT UNE FENTE LONGILIGNE**
ZU LACKIERENDES KAROSSERIETEIL MIT EINEM LONGITUDINALEN SPALT
CHASSIS ELEMENT TO BE PAINTED, HAVING A LONGITUDINAL SLOT

(30) Priorité: 16.05.2018 FR 1854068
(43) Date de publication de la demande: 20.11.2019
(73) Titulaire: Compagnie Plastic Omnium, 69007 Lyon (FR)
(72) Inventeur: LOUOT, Thierry, 01200 LANCRANS (FR); GOMEZ, Jean-François, 01150 Sainte-Julie (FR); DUPONNOIS, Philippe, 52200 LANGRES (FR)
(74) Mandataire: LLR

(56) Documents cités:
- EP-A1- 1 512 582
- EP-A1- 2 401 179
- EP-A2- 0 703 008
- DE-A1- 10 250 392
- JP-A- S63 175 666
- JP-U- H0 737 825

## Description

L'invention concerne une pièce de carrosserie de véhicule automobile destinée à être peinte et comprenant au moins une fente longiligne, ainsi qu'un procédé de fabrication d'une telle pièce.

On entend par fente longiligne, une ouverture étroite et étirée pratiquée dans un objet.

En essayant de peindre directement une pièce de carrosserie dotée d'une telle fente, il a été observé des déformations des bords de la fente longiligne sous l'effet de l'élévation en température.

On connaît le document JPH0737825U, lequel divulgue un pare-chocs composé d'un pare-chocs supérieur et d'un pare-chocs inférieur séparés par une fente, et dans lequel, afin de permettre de peindre le pare-chocs, un élément est prévu afin de maintenir l'écartement de la fente. En outre, il a déjà été mis en œuvre un procédé de maintien d'écartement entre deux faces en vis-à-vis qui permet d'éviter la déformation d'une fente longiligne. On configure pour cela un moule de pièce de carrosserie qui, en plus de mouler une fente longiligne, laisse à intervalle régulier le long de cette fente longiligne des éléments de maintien d'écartement d'un bord à l'autre de la fente longiligne qui prennent appui sur les bords. Ces éléments de maintien d'écartement permettent de rigidifier les bords de la fente et de les maintenir en place. Ainsi, la forme de la fente longiligne n'est pas déformée lors de la manipulation de la pièce de carrosserie avant son assemblage sur le véhicule automobile. Une fois la pièce de carrosserie positionnée sur le véhicule, ces éléments de maintien d'écartement sont coupés et retirés par un opérateur à l'aide d'un outil tranchant.

Un élément de maintien d'écartement constitue une entretoise c'est-à-dire une pièce rigide qui en relie deux autres et les maintient dans un écartement fixe.

Ces éléments de maintien d'écartement présentent les inconvénients suivants.

La présence de ces éléments de maintien d'écartement vient perturber le jet de peinture et crée des défauts de peinture (tels que des coulures ou des effets d'ombre) à cause de plusieurs phénomènes : cage de Faraday, phénomènes électrostatiques, etc.

En effet, la peinture est appliquée selon un procédé d'application électrostatique. Ce procédé consiste à charger la peinture en sortie du bol du robot peintre afin qu'elle soit attirée par la pièce à peindre reliée à la masse. L'effet électrostatique ne joue qu'à proximité du substrat (quelques millimètres). Ainsi, tout défaut tel qu'une présence de bosse, de rugosité, de nervure, même derrière la surface à peindre, peut engendrer une perturbation électrostatique, qui va engendrer une perturbation dans le flux de peinture et donc d'éventuels défauts de peinture.

De plus, la découpe des éléments de maintien d'écartement de la fente longiligne est une opération délicate qui peut facilement laisser des traces sur la pièce de carrosserie finale au niveau des bords de la fente longiligne, et qui peut également présenter un risque de blessure pour l'opérateur en charge de cette découpe. Par ailleurs, cette opération mobilise un opérateur pendant un certain temps pour chaque pièce de carrosserie, ce qui représente un délai supplémentaire et un surcoût récurrents.

L'invention a pour but de remédier à ces inconvénients en fournissant une pièce de carrosserie comportant une fente longiligne munie d'un élément de maintien d'écartement de la fente qui ne perturbe pas l'application de la peinture et qui se retire simplement manuellement après l'étape de peinture sans qu'il soit nécessaire d'utiliser un outil coupant.

L'objet de l'invention est une pièce de carrosserie de véhicule automobile destinée à être peinte, conforme à l'objet de la revendication 1.

Les trois parois de l'élément de maintien forment un seul bloc rigide, la première paroi et la seconde paroi assurent la liaison avec les bords de la fente longiligne de la pièce de carrosserie, la troisième paroi assure le maintien d'écartement proprement dit.

Au sens de l'invention, deux surfaces de deux éléments sont affleurantes si l'angle formé à la jonction entre ces deux éléments par deux surfaces orientées du même côté forment un angle de 180°.

Le dispositif peut en outre comporter l'une ou plusieurs des caractéristiques suivantes, prises seules ou en combinaison.

Avantageusement, la pièce de carrosserie comprend une surface à peindre et une surface opposée, les première et seconde parois de l'élément de maintien d'écartement étant positionnées en saillie de la surface opposée afin de créer une distance suffisante entre la masse de matière de l'élément de maintien d'écartement et les surfaces destinées à recevoir de la peinture. Ainsi, on évite des phénomènes de perturbation électrostatique et des défauts de peinture comme des floculations, des coulures, des rides, des brouillards de pulvérisation, peau d'orange, etc.

Avantageusement la pièce de carrosserie comprend un élément de maintien avec une forme qui permet d'exercer une force de levier manuellement au niveau des jonctions en exerçant une force latérale au niveau de la troisième paroi. On applique donc un moment de force manuellement entrainant une rotation jusqu'à un détachement au niveau des jonctions de l'élément de maintien par rapport à la pièce de carrosserie. Ainsi un opérateur peut très rapidement et sans outillage retirer proprement un élément de maintien d'écartement.

Avantageusement la pièce de carrosserie comprend un élément de maintien d'écartement dont l'épaisseur des première et deuxième parois est réduite à proximité des jonctions avec les faces des bords longitudinaux ce qui permet de diminuer l'effort à fournir pour retirer proprement un élément de maintien d'écartement.

Avantageusement, la pièce de carrosserie comprend un élément de maintien d'écartement dont la troisième paroi a une épaisseur renforcée ce qui permet de renforcer la capacité de maintien de l'élément de maintien d'écartement.

Avantageusement, la pièce de carrosserie comprend un élément de maintien d'écartement dont l'épaisseur renforcée de la troisième paroi a la forme d'une nervure dorsale positionnée du côté opposé à la surface à peindre de la pièce de carrosserie de véhicule automobile, ainsi le renforcement de la capacité de maintien ne perturbe pas le jet de peinture.

L'objet de l'invention est également un procédé de peinture d'une pièce de carrosserie de véhicule automobile conforme à l'objet de la revendication 7.

Nous allons maintenant présenter un mode de réalisation de l'invention donné à titre d'exemple non limitatif et à l'appui des figures annexées sur lesquelles :

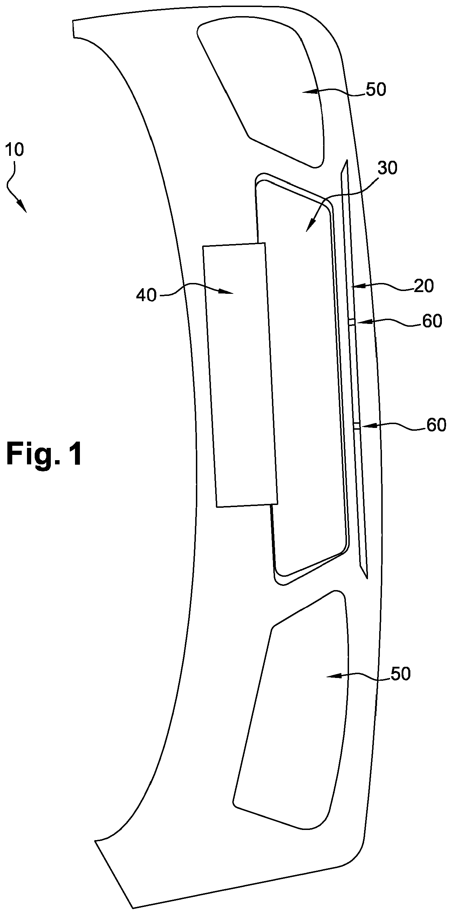

- la figure 1 est une vue de face d'une surface à peindre d'un pare-chocs d'un véhicule automobile destiné à être peint et comportant une fente longiligne dotée de deux éléments de maintien d'écartement,
- la figure 2 est une vue de face partielle du pare-chocs, centrée sur la fente longiligne,
- la figure 3 est une vue en coupe AA en trois dimensions de trois-quarts gauche,
- la figure 4 est une vue en coupe BB de l'élément de maintien.

Selon les exemples illustrés sur les figures, la pièce de carrosserie est un pare-chocs 10 qui comprend une fente longiligne 20 située sur la partie basse du pare-chocs 10, sous l'orifice de l'entrée d'air de la grille du radiateur 30, elle-même située sous la plaque d'immatriculation 40.

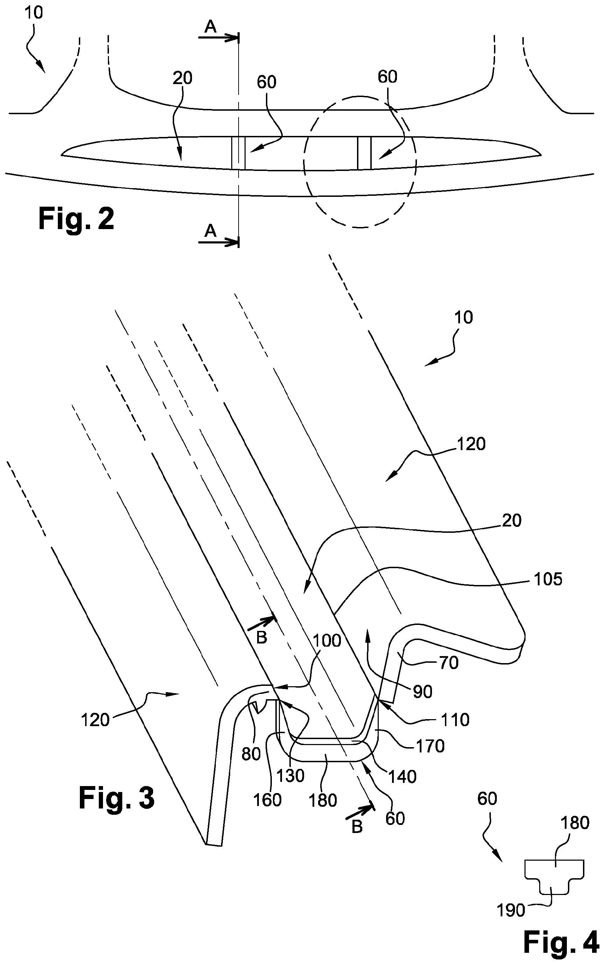

La fente longiligne 20 est positionnée de façon centrale et symétrique entre les orifices 50 destinés à recevoir les éléments d'éclairage nocturne du véhicule. Dans la fente longiligne 20, il y a deux éléments de maintien d'écartement 60. La figure 2 permet d'illustrer la position de la coupe AA qui est représentée en perspective dans la figure 3.

L'élément de maintien d'écartement 60 est positionné en dehors de l'ouverture de la fente, c'est-à-dire, notamment, que l'élément de maintien d'écartement 60 ne coupe aucun segment reliant deux points quelconques situés sur les bords de la fente.

La fente longiligne 20 peut être définie par deux dimensions : sa hauteur, qui correspond à la distance entre deux bords longitudinaux parallèles 70, 80 opposés de la fente longiligne 20, et sa longueur qui correspond à la distance entre les deux points où les deux bords longitudinaux opposés se rejoignent, ces deux points de convergence étant les extrémités de la fente longiligne 20. Le rapport entre longueur et hauteur d'une fente longiligne est très supérieur à 1. Plusieurs formes sont possibles pour le point de convergence : en U en V, avec des angles plus ou moins arrondis. Une fente longiligne au sens de l'invention comporte également des bords longitudinaux ayant au moins deux faces 90, 100 en vis-à-vis l'une de l'autre.

Au sens de l'invention, deux faces sont en vis-à-vis si l'on peut définir au moins un segment vertical reliant chacune des faces considérées.

Sur la figure 3, la fente longiligne présente des bords longitudinaux parallèles 70, 80 comprenant chacun respectivement une face 90 et 100 en vis-à-vis. La face 90 est formée par la surface à peindre de la pièce de carrosserie d'un véhicule automobile courbée à 90° au niveau de la fente longiligne vers l'intérieur de cette fente longiligne, tandis que la face 100 est formée par l'épaisseur de la paroi de la pièce de carrosserie à peindre. Sur chacune de ces faces 90,100, au niveau d'une arête 110, 130 formée par un bord de ces faces 90,100 et par une surface opposée à la surface à peindre 120, un élément de maintien d'écartement 60 est accroché formant une jonction 110, 130 de manière à ce qu'une surface 140 de l'élément de maintien d'écartement 60 orientée dans le même sens que la surface de la pièce de carrosserie à peindre soit affleurante avec chacune des faces 90,100 de la fente longiligne 20 au niveau des jonctions 110, 130. L'élément de maintien d'écartement 60 est constitué de trois parties qui forment sensiblement un U : deux parties sont constituées par deux parois 160, 170, dont une face 140 est affleurante avec les faces 90 et 100 des bords de la fente longiligne au niveau des jonctions 110. Cette première paroi 160 et cette deuxième paroi 170 ont une épaisseur qui diminue au niveau des jonctions 110 formant sensiblement une section en pointe. La quantité de matière qui crée le contact entre l'élément de maintien d'écartement 60 et la pièce de carrosserie à peindre 10 est ainsi réduite au niveau des jonctions 110, 130 afin de rendre l'élément de maintien d'écartement 60 facilement sécable par un opérateur. Les deux parois 160 et 170 sont en saillies de la surface opposée à la surface à peindre 120 afin de créer, lors de l'étape de peinture, une distance entre la source de peinture et la surface 140 au niveau d'une troisième paroi 180 de l'élément de maintien d'écartement. Cette distance permet d'éviter des perturbations électrostatiques. Les deux parois 160 et 170 sont courbées jusqu'à se rejoindre et constitue ainsi un lien de matière continu qui forme la troisième paroi 180 entre la première paroi 160 et la deuxième paroi 170.

Sur la figure 4, la vue en coupe de la troisième paroi 180 permet d'identifier une nervure dorsale 190 positionnée du côté opposé à la surface à peindre 120 de la pièce de carrosserie de véhicule automobile 10. Ce profil permet de renforcer la capacité de maintien d'écartement sans pour autant perturber davantage la phase de peinture.

L'invention n'est pas limitée aux modes de réalisation présentés et d'autres modes de réalisation apparaîtront clairement à l'homme du métier. Il est notamment possible de prévoir des éléments de maintien d'écartement pour des fentes avec des bords dont les faces en vis-à-vis sont formées par deux faces à peindre courbées à 90° en vis-à-vis, ou par deux épaisseurs de la paroi de la pièce de carrosserie à peindre.

Il est également possible de donner des formes différentes à l'élément de maintien d'écartement afin de lui donner un profil qui perturbe le moins possible la phase de peinture, tout en simplifiant le plus possible son retrait après la phase de peinture.

### Nomenclature des figures

- 10: : pièce de carrosserie
- 20: : fente longiligne
- 30: : orifice d'entrée d'air de la grille du radiateur
- 40: : plaque d'immatriculation
- 50: : orifices destinés à recevoir les éléments d'éclairage nocturne du véhicule
- 60: : éléments de maintien d'écartement
- 70, 80: : bords longitudinaux parallèles
- 90, 100: : faces en vis-à-vis
- 105: : arêtes formées par le bord de ces faces 90,100 et d'une surface opposée à la surface à peindre 120
- 110, 130: : jonctions d'un élément de maintien 60 avec les faces 90, 100
- 120: : surface à peindre
- 140: : surface de l'élément de maintien d'écartement 60
- 160, 170: : deux parois de l'élément de maintien d'écartement 60
- 180: : troisième paroi de l'élément de maintien d'écartement
- 190: : nervure dorsale

## Revendications

1. Pièce de carrosserie (10) de véhicule automobile destinée à être peinte, comprenant au moins une fente longiligne (20) et au moins un élément de maintien d'écartement (60) de l'ouverture de la fente (20), **caractérisée en ce que** :
• ledit élément de maintien d'écartement (60) est positionné en dehors de l'ouverture de la fente ;
• la pièce de carrosserie (10) est fabriquée par moulage de plastique et comprend au moins un élément de maintien d'écartement (60) mis en place lors du moulage ;
• la fente longiligne (20) comporte des bords longitudinaux (70, 80) présentant au moins deux faces en vis-à-vis (90, 100) l'une de l'autre, lesdites faces (90, 100) étant ponctuellement reliées entre elles par l'élément de maintien d'écartement (60) ; et
• l'élément de maintien d'écartement (60) comprend une première paroi (170) dont une surface (140) est affleurante avec ladite face (90) d'un bord longitudinal (70) au moins à une première jonction (110), une seconde paroi (160) dont une surface (140) est affleurante avec ladite face (100) de l'autre bord longitudinal (80) au moins à une deuxième jonction (130), et une troisième paroi (180) qui relie la première (160) et la seconde paroi (170).

2. Pièce de carrosserie (10) selon la revendication précédente, comprenant une surface à peindre (120) et une surface opposée, les première et seconde parois (160, 170) de l'élément de maintien d'écartement (60) étant positionnées en saillie de la surface opposée.

3. Pièce de carrosserie (10) selon l'une des revendications précédentes, dans laquelle l'élément de maintien (60) a une forme qui permet d'appliquer un moment de force manuellement entrainant une rotation jusqu'à un détachement au niveau des jonctions (110, 130) de l'élément de maintien d'écartement (60) par rapport à la pièce de carrosserie (10).

4. Pièce de carrosserie (10) selon l'une des revendications précédentes, dans laquelle l'épaisseur des première et deuxième parois (160, 170) est réduite à proximité des jonctions (110, 130) avec les faces des bords longitudinaux (70, 80).

5. Pièce de carrosserie (10) selon l'une des revendications précédentes, dans laquelle la troisième paroi (180) a une épaisseur renforcée.

6. Pièce de carrosserie (10) selon la précédente revendication, dans laquelle l'épaisseur renforcée de la troisième paroi (180) a la forme d'une nervure dorsale positionnée du côté opposé à la surface à peindre (120) de la pièce de carrosserie (10) de véhicule automobile.

7. Procédé de peinture d'une pièce de carrosserie (10) de véhicule automobile selon l'une des revendications précédentes, **caractérisé en ce que** l'on réalise les étapes suivantes :
- on fabrique la pièce de carrosserie (10) de véhicule automobile selon l'une des revendications précédentes; ;
- on réalise une étape de peinture ; et
- on retire manuellement le ou les éléments de maintien d'écartement (60).

## Patentansprüche

1. Karosserieteil (10) eines Kraftfahrzeugs, das dazu bestimmt ist, lackiert zu werden, aufweisend mindestens einen länglichen Schlitz (20) und mindestens ein Element (60) zur Aufrechterhaltung der lichten Weite der Öffnung des Schlitzes (20), **dadurch gekennzeichnet, dass**:
- das Element (60) zur Aufrechterhaltung der lichten Weite außerhalb der Öffnung des Schlitzes positioniert ist;
- das Karosserieteil (10) im Kunststoff-Formverfahren hergestellt ist und mindestens ein während des Formverfahrens eingesetztes Element (60) zur Aufrechterhaltung der lichten Weite aufweist;
- der längliche Schlitz (20) Längskanten (70, 80) mit mindestens zwei gegenüberliegenden Flächen (90, 100) aufweist, wobei die Flächen (90, 100) durch das Element (60) zur Aufrechterhaltung der lichten Weite punktuell miteinander verbunden sind; und
- das Element (60) zur Aufrechterhaltung der lichten Weite eine erste Wand (170) mit einer Oberfläche (140) aufweist, die mit der Fläche (90) einer Längskante (70) zumindest an einer ersten Verbindung (110) bündig ist, eine zweite Wand (160) mit einer Oberfläche (140), die mit der Fläche (100) der anderen Längskante (80) zumindest an einer zweiten Verbindung (130) bündig ist, und eine dritte Wand (180), die die erste (160) und die zweite Wand (170) verbindet.

2. Karosserieteil (10) nach dem vorstehenden Anspruch, aufweisend eine zu lackierende Oberfläche (120) und eine gegenüberliegende Oberfläche, wobei die erste und zweite Wand (160, 170) des Elements (60) zur Aufrechterhaltung der lichten Weite von der gegenüberliegenden Oberfläche vorstehen.

3. Karosserieteil (10) nach einem der vorstehenden Ansprüche, wobei das Element (60) zur Aufrechterhaltung der lichten Weite eine Form hat, die es erlaubt, ein Kraftmoment manuell aufzubringen, das eine Drehung bis zur Ablösung an den Verbindungsstellen (110, 130) des Elements (60) zur Aufrechterhaltung der lichten Weite relativ zum Karosserieteil (10) bewirkt.

4. Karosserieteil (10) nach einem der vorstehenden Ansprüche, wobei die Dicke der ersten und zweiten Wand (160, 170) in der Nähe der Verbindungsstellen (110, 130) mit den Flächen der Längskanten (70, 80) reduziert ist.

5. Karosserieteil (10) nach einem der vorstehenden Ansprüche, bei dem die dritte Wand (180) eine verstärkte Dicke aufweist.

6. Karosserieteil (10) nach dem vorstehenden Anspruch, wobei die verstärkte Dicke der dritten Wand (180) die Form einer hinteren Rippe hat, die auf der der zu lackierenden Oberfläche (120) des Karosserieteils (10) des Kraftfahrzeugs gegenüberliegenden Seite angeordnet ist.

7. Verfahren zum Lackieren eines Karosserieteils (10) eines Kraftfahrzeugs gemäß einem der vorstehenden Ansprüche, **dadurch gekennzeichnet, dass** die folgenden Schritte durchgeführt werden:
- das Karosserieteil (10) des Kraftfahrzeugs wird nach einem der vorstehenden Ansprüche hergestellt;
- ein Lackierschritt wird durchgeführt; und
- das oder die Elemente (60) zur Aufrechterhaltung der lichten Weite wird (werden) manuell entfernt.

## Claims

1. Motor vehicle body part (10) intended to be painted, comprising at least one elongate slot (20) and at least one element (60) for maintaining the gap of the opening of the slot (20), **characterized in that**:
• said gap maintaining element (60) is positioned outside the opening of the slot;
• the body part (10) is produced by plastic molding and comprises at least one gap maintaining element (60) inserted during molding;
• the elongate slot (20) has longitudinal edges (70, 80) having at least two opposing faces (90, 100), said faces (90, 100) being interconnected at a point by the gap maintaining element (60); and
• the gap maintaining element (60) comprises a first wall (170) of which a surface (140) is flush with said face (90) of a longitudinal edge (70) at least at a first junction (110), a second wall (160) of which a surface (140) is flush with said face (100) of the other longitudinal edge (80) at least at a second junction (130), and a third wall (180) which connects the first (160) and the second wall (170).

2. Body part (10) according to the preceding claim, comprising a surface to be painted (120) and an opposing surface, the first and second walls (160, 170) of the gap maintaining element (60) being positioned so as to project from the opposing surface.

3. Body part (10) according to any of the preceding claims, wherein the maintaining element (60) has a shape which allows a moment of force to be applied manually, causing a rotation until detachment at the junctions (110, 130) of the gap maintaining element (60) relative to the body part (10).

4. Body part (10) according to any of the preceding claims, wherein the thickness of the first and second walls (160, 170) is reduced close to the junctions (110, 130) with the faces of the longitudinal edges (70, 80).

5. Body part (10) according to any of the preceding claims, wherein the third wall (180) has a reinforced thickness.

6. Body part (10) according to the preceding claim, wherein the reinforced thickness of the third wall (180) is in the form of a dorsal rib positioned on the side opposite to the surface to be painted (120) of the motor vehicle body part (10).

7. Method for painting a body part (10) of a motor vehicle according to any of the preceding claims, **characterized in that** the following steps are carried out:
- the motor vehicle body part (10) according to any of the preceding claims is produced;
- a painting step is carried out; and
- the gap maintaining element or elements (60) is/are manually removed.
